# EUROPÄISCHE PATENTSCHRIFT

(11) **EP 2 520 476 B1**
(45) Veröffentlichungstag und Bekanntmachung des Hinweises auf die Patenterteilung: **14.01.2015**
(21) Anmeldenummer: 12001787.6
(22) Anmeldetag: 16.03.2012
(51) Int. Cl.: B62D 25/08

(54) **Fahrzeugkarosserie mit einer Tragstruktur**
Support structure of a vehicle body
Structure de support d'une carrosserie de véhicule

(30) Priorität: 04.05.2011 DE 102011100323
(43) Veröffentlichungstag der Anmeldung: 07.11.2012
(73) Patentinhaber: Audi AG, 85045 Ingolstadt (DE)
(72) Erfinder: Soa, Sebastian, 74348 Lauffen (DE)
(74) Vertreter: Patzelt, Heike Anna Maria

(56) Entgegenhaltungen:
- DE-A1- 10 235 382
- DE-A1- 10 248 794
- DE-A1- 19 754 427
- DE-A1- 19 943 773
- DE-A1-102008 039 972
- DE-A1-102008 053 767
- DE-A1-102009 021 961

## Beschreibung

Die Erfindung betrifft eine Fahrzeugkarosserie mit einer Tragstruktur gemäß dem Oberbegriff des Patentanspruchs 1.

Obwohl auf beliebige Fahrzeuge und Fahrzeugbereiche anwendbar, werden die vorliegende Erfindung sowie die ihr zu Grunde liegende Problematik in Bezug auf ein Personenkraftfahrzeug und insbesondere auf einen Endbereich eines Personenkraftfahrzeugs näher erläutert.

Derartige Tragstrukturen sind im modernen Fahrzeugbau hinlänglich bekannt und umfassen im Wesentlichen Anordnungen von Längsträgern und Querträgern, welche einerseits die erforderliche Stabilität und Verbindungssteifigkeit sicherstellen und andererseits bei einem Fahrzeugaufprall durch Deformationen Aufprallenergie aufnehmen. Insbesondere muss die Tragstruktur eine Steifigkeit aufweisen, welche bei einem Unfall beziehungsweise Crash die Beschädigung des Fahrzeuges und die Gefährdung der Insassen minimiert. Üblicherweise wird in einen Laderaum in einem Heckbereich eines Fahrzeugs eine Laderaumwanne untergebracht, in welcher auch eine Batterie bzw. elektronische Bauteile angeordnet sein können. Ein Aufprall auf das Fahrzeugheck führt in der Regel zu einer hohen Intrusion in den Heckbereich des Fahrzeugs und zur Beschädigung der darin angeordneten Laderaumwanne sowie der Batterie bzw. der elektronischen Bauteile.

Aus der DE 102 48 794 A1 ist eine Tragstruktur für den Vorderwagen eines Fahrzeugs bekannt. Die Tragstruktur weist eine Längsträgeranordnung mit in unterschiedlichen Ebenen angeordneten Längsträgern auf, wobei in jeder Ebene zumindest zwei im Wesentlichen parallel zueinander angeordnete Längsträger vorgesehen sind, welche sich jeweils in Richtung einer Fahrzeuglängsachse entlang einer Fahrzeugaußenseite erstrecken. Zudem weist die Tragstruktur ein U-förmiges Tragprofil mit einer hohlen Bodenwandung und zwei hohlen sich in Fahrzeuglängsrichtung erstreckenden Seitenwandungen auf, durch welches Motorkühlflüssigkeit geleitet wird und von welchem weitere Betriebsflüssigkeiten derart aufgenommen sind, dass diese einen jeweils separierten Bereich des Tragprofils vollständig ausfüllen. Die Gestalt der Seitenwandungen und der Bodenwandung sind an die Motorraumstruktur angepasst, wobei das Antriebsaggregat im Bereich zwischen den Seitenwandungen angeordnet ist.

In der DE 199 43 773 A1 wird eine Hilfsrahmenanordnung für einen Fahrzeugaufbau zur Aufnahme von Crashenergie beschrieben. Die Hilfsrahmenanordnung weist zwei im Wesentlichen in Längsrichtung des Fahrzeugaufbaus verlaufende Streben auf, welche jeweils mit einem Ende an einem Front- und/oder Heckbereich des Fahrzeugaufbaus befestigt sind. Des Weiteren umfasst die Hilfsrahmenanordnung ein flächenhaftes Crashelement, welches mit den beiden Streben verbunden ist und sich in Bezug auf die Längsrichtung des Fahrzeugaufbaus zwischen den Enden der Streben erstreckt.

In der DE 10 2008 053 767 A1 wird eine Fahrzeugkarosserie mit einem vorderen oder hinteren Endbereich offenbart, welcher einen Kofferraum und einen Aggregateraum aufweist. Der Kofferraum ist in Fahrzeuglängsrichtung durch eine erste Trennwand und eine zweite Trennwand begrenzt. Der Aggregateraum ist in der Fahrzeuglängsrichtung durch die zweite Trennwand und eine dritte Trennwand begrenzt. Des Weiteren sind der Kofferraum und der Aggregateraum in der Fahrzeugquerrichtung durch zwei seitliche Längsträger begrenzt. Zudem schließt ein Dichtrahmen den Kofferraum und den Aggregateraum von oben ab. Der Kofferraum dient üblicherweise zur Unterbringung von Gepäckstücken und ist daher bevorzugt als Trockenraum konzipiert, welcher gegenüber einer Umgebung des Fahrzeugs abgedichtet ist. Im Unterschied dazu kann der Aggregateraum zur Unterbringung unterschiedlicher Aggregate als Nassraum ausgestaltet sein, so dass Feuchtigkeit aus der Umgebung eindringen kann.

Die DE 102 35 382 A1 offenbart eine Aufbaustruktur eines Personenkraftwagens mit zwei voneinander beabstandeten vorderen Längsträgern, welche an einer Stirnwand angeschlossen sind.

Die DE 1097 54 427 A1 offenbart eine Achsanordnung für eine selbsttragende Kraftfahrzeugkarosserie.

Aus der Offenlegungsschrift DE 10 2008 006 852 A1 ist eine Fahrzeugkarosserie mit einer Längsträgeranordnung bekannt, deren Längsträger einen Laderaum aufnehmen. In der Tragstruktur ist eine Laderaumwanne angeordnet, welche mit einem zwischen den Längsträgern angeordneten Querträger fest verbunden ist. Die Laderaumwanne begrenzt den Laderaum und dient zur Unterbringung von Steuergeräten und/oder einer Batterie.

In der Gebrauchsmusterschrift DE 20 2006 020 851 U1 wird eine weitere Fahrzeugkarosserie mit einer Längsträgeranordnung beschrieben. Die Längsträgeranordnung weist parallel angeordnete Längsträger in zwei übereinander liegenden Ebenen auf, welche zur Versteifung der Tragstruktur teilweise mittels Rahmenelementen aus Gussteilen miteinander verbunden sind. Die beschriebene Längsträgeranordnung kann sowohl in einem Vorderbereich als auch in einem Endbereich des Fahrzeugs eingesetzt werden und einen Laderaum oder einen Motorraum aufnehmen.

Aus der Offenlegungsschrift DE 10 2009 021 961 A1 ist eine Fahrzeugkarosserie mit einer Tragstruktur bekannt, deren Längsträgeranordnung ein zwischen sich angeordnetes Deformationselement mit einer Sollbruchstelle zur Absorption von Aufprallenergie aufnimmt. Die vorliegende Längsträgeranordnung ist hierbei im Bereich eines Vorderwagens integriert, in welchem ein Motorraum untergebracht ist.

Ein ähnlicher Laderaum wird in der DE 102008039972 gezeigt.

Die Aufgabe der Erfindung ist es, eine Fahrzeugkarosserie mit einer Tragstruktur anzugeben, welche bei einfacher und kostengünstiger Konstruktion sowie erhöhter Steifigkeit einen ausreichenden Laderaum in der Tragstruktur bereitstellt.

Erfindungsgemäß wird die Aufgabe durch Bereitstellung einer Fahrzeugkarosserie mit den Merkmalen des Patentanspruchs 1 gelöst. Vorteilhafte Ausführungsformen und Weiterbildungen der Erfindung sind in den abhängigen Ansprüchen angegeben.

Um eine Fahrzeugkarosserie mit einer Tragstruktur anzugeben, welche bei einfacher und kostengünstiger Konstruktion sowie erhöhter Steifigkeit einen ausreichenden Laderaum in der Tragstruktur bereitstellt, wird erfindungsgemäß vorgeschlagen, dass die Tragstruktur einen Laderaum aufnimmt, welcher einen im Wesentlichen innerhalb der Längsträgeranordnung angeordneten ersten Ladebereich und einen im Wesentlichen oberhalb der Längsträgeranordnung angeordneten zweiten Ladebereich umfasst. In vorteilhafter Weise entsteht durch die Aufteilung des Ladebereichs insbesondere im ersten Ladebereich zusätzliches Laderaumvolumen mit verschiedenen Eigenschaften und unterschiedlicher Nutzbarkeit. Im ersten innerhalb der Längsträgeranordnung angeordneten Ladebereich wird auf eine konstruktiv einfache und kostengünstige Art zusätzliches Laderaumvolumen mit einer hohen Steifigkeit des Laderaums in der Tragstruktur gewonnen. Innerhalb dieses ersten Ladebereichs kann der zusätzlich gewonnene und eine hohe Steifigkeit aufweisende erste Laderaum als Kofferraumvolumen oder Package für eine sichere Unterbringung von elektrischen Steuergeräten und/oder anderen Funktionsbaugruppen genutzt werden. Dadurch können bisher im Fahrgastraum untergebrachte Steuergeräte und/oder Funktionsbaugruppen im Laderaum untergebracht und der Fahrgastraum entlastet werden. Der im Wesentlichen oberhalb der Längsträgeranordnung angeordnete zweite Ladebereich kann unabhängig von den begrenzenden Dimensionen der darunterliegenden Längsträgeranordnung gestaltet und optimal als Laderaum ausgebildet werden. Zudem ist der zweite Ladebereich sehr gut zugänglich und ideal für eine Beladung auch von großvolumigen Gegenständen geeignet. Die erforderliche Steifigkeit der Tragstruktur ist bereits durch die Längsträgeranordnung im ersten Ladebereich erfüllt, wodurch der konstruktive Schwerpunkt im zweiten Ladebereich auf einer optimalen Nutzung mit optisch ansprechender Ausgestaltung des verbliebenen Laderaums liegt. Im Ergebnis lässt sich somit eine optimale Nutzung und ein verbesserter Schutz des Laderaums bzw. der im Laderaum befindlichen Gegenstände und der Insassen des Fahrzeugs realisieren, da die Tragstruktur im Falle eines Aufpralls besser zur Verzehrung von Aufprallenergie herangezogen werden kann und Intrusionen in den Laderaum sowie in die Fahrgastzelle weitgehend verhindert werden können. Eine solche Längsträgeranordnung mit Laderaum kann sowohl im Fahrzeugfrontbereich als auch im Fahrzeugheckbereich angeordnet sein.

Zur Bildung des ersten Ladebereichs sind zwischen den Längsträgern der Längsträgeranordnung ausgebildete Zwischenräume zumindest teilweise durch Flächenelemente geschlossen. Die Flächenelemente können beispielsweise aus Metall- und/oder Faserverbundwerkstoffen hergestellt werden. Vorzugsweise wird auf diese Weise der erste Ladebereich des Laderaumes innerhalb der Längsträgeranordnung mit einfachen Bauteilen größtmöglich dimensioniert, wodurch sich ein nach unten geschlossener erster Laderaum mit einer optimalen Ausnutzung des vorliegenden Bauraums bildet. Dabei ist in vorteilhafter Weise die begrenzende Einfahrdimension der Längsträgeranordnung für die vollständige Nutzung und Ausgestaltung durch Einlegeteile, wie beispielsweise eine Laderaumwanne, für den ersten Ladebereich ohne Bedeutung. Neben der Bildung eines Laderaums erfüllen die in die Tragstruktur integrierten Flächenelementen zugleich eine weitere Funktion, indem sie als Bestandteil der Tragstruktur zu einer Erhöhung der Steifigkeit der Tragstruktur beitragen. Auf Grund der Funktionsintegration der in der Längsträgeranordnung angeordneten Flächenelemente wird insbesondere die Steifigkeit der Tragstruktur im hoch belasteten Bereich des ersten Laderaums und damit die Steifigkeit der Fahrzeugkarosserie insgesamt verbessert. Zusätzlich wird hierdurch in vorteilhafter Weise ermöglicht, dass die Bauteile der Tragstruktur insbesondere die vorzugsweise als Profile ausgeführten Längsträger bei weiterhin ausreichender Fähigkeit zur Absorption bzw. zur Weiterleitung der Aufprallkräfte geringere Wandstärken aufweisen können, wodurch zusätzlich eine Gewichtsreduktion der Fahrzeugkarosserie erzielt werden kann. Auf diese Weise können sowohl die Materialkosten als auch die Herstellungskosten der Fahrzeugkarosserie verringert werden.

In weiterer vorteilhafter Ausgestaltung der erfindungsgemäßen Fahrzeugkarosserie sind die Flächenelemente zumindest teilweise als Bodenteil und/oder als Seitenteil des ersten Ladebereichs ausgeführt. Dadurch kann in vorteilhafte Weise mit einer geringen Stückzahl von Flächenelementen ein wannenförmiger erster Laderaum hergestellt werden, welcher im Gegensatz zum Einsatz einer herkömmlichen Laderaumwanne einen geringeren Gewichtsbedarf aufweist und doppelt ausgeführte Flächenelemente im Bereich der Längsträger vermeidet. In vorteilhafter Weise schließen als Bodenteil und als Seitenteil ausgeführte Flächenelemente den ersten Laderaum nach unten bzw. seitlich nach außen dicht ab. Hierdurch entsteht ein besonders stabiler, wannenförmiger erster Laderaum, welcher den Laderaum und die Tragstruktur der Fahrzeugkarosserie gegen Spritzwasser, Streusalz, Steinschlag, Staub und andere äußere Einflüsse abdichtet. In Verbindung mit dem Bodenteil bildet sich im ersten Ladebereich der Längsträgeranordnung ein wannenförmigen Laderaum aus, der zwischen den Längsträgern eine großes Laderaumvolumen einnimmt und ein besonders hohe Steifigkeit aufweist. Ferner sind die montierten Flächenelemente im Gegensatz zu der herkömmlich eingelegten Laderaumwanne klein dimensioniert und verringern dadurch die Gewichtseinbringung und vermeiden eine Materialdopplung, die zwangsweise durch ein Einlegeelement zustande kommen würde. Zugleich ist das als Bodenteil ausgeführte Flächenelement in seiner Funktion als tragendes Bauteil besonders belastbar bzw. verwindungssteif ausgeführt. In vorteilhafter Weise ist außerdem eine einfache Herstellung und eine problemlose Montage des Bodenteils möglich. Des Weiteren eignet sich eine Tragstruktur einer Fahrzeugkarosserie in vorteilhafter Weise ideal für eine Aufnahme eines derartigen Bodenteils, ohne dass große konstruktive Änderungen der Tragstruktur des Fahrzeugs erfolgen müssen. Dadurch ist eine kostengünstige Nachrüstung bzw. Integration des Bodenteils in eine laufende Fahrzeugproduktion realisierbar.

Eine bevorzugte Realisierung der erfindungsgemäßen Fahrzeugkarosserie sieht vor, dass die Flächenelemente zumindest teilweise mit den Längsträgern verbunden sind. Die Flächenelemente können beispielsweise durch Schrauben, Kleben, Schweißen usw. mit den Längsträgern verbunden werden. Ausführungsformen der vorliegenden Erfindung ermöglichen in vorteilhafter Weise eine einfache und schnelle Montage der wenigen Flächenelemente an die Längsträger der Tragstruktur, wodurch diese auch leicht austauschbar sind. Durch die flächenbündige Verbindung mit der Außenfläche der Längsträger generiert die konstruktive Anbindung der Flächenelemente an die Längsträger zusätzliches Laderaumvolumen, wodurch das Gesamtvolumen des Laderaumes zunimmt und die zusätzlich gewonnenen Bereiche zwischen den Längsträgern für Kofferraumvolumen und/oder Package, wie beispielsweise zur Unterbringung von elektrischen Steuergeräten und/oder anderen Funktionsbaugruppen, genutzt werden können. Im Gegensatz zu herkömmlichen Laderaumwannen sinkt der Bauraumbedarf zur Erzeugung eines Laderaumvolumens durch den Einsatz der Flächenelemente. Zudem übernimmt ein montiertes Flächenelement auf einfache und kostengünstige Weise als zusätzlicher verwindungssteifer Deformationsbereich zur Aufnahme, Absorption und/oder Weiterleitung von Aufprallenergie eine weitere Funktion innerhalb der Tragstruktur. In vorteilhafter Weise ist hierdurch die Steifigkeit der Tragstruktur der Fahrzeugkarosserie im gesamten Heckbereich erhöht, welcher hierdurch zur Aufnahme und/oder Weiterleitung von nicht absorbierter Aufprallenergie in die Tragstruktur des Fahrzeugs zur Verfügung steht. Infolgedessen wird insbesondere im Falle eines Aufpralls das Heck des Fahrzeugs und somit auch die an das Heck angrenzende Fahrgastzelle entlastet und die Sicherheit der Fahrzeuginsassen erhöht. Gleiches gilt analog für den Fahrzeugfrontbereich, wenn eine solche Längsträgeranordnung mit Ladebereich im Frontbereich angeordnet ist.

Zweckmäßigerweise sind die Flächenelemente zumindest teilweise als Schubfeld ausgeführt. In vorteilhafter Weise ist durch die Bereitstellung der als Schubfelder ausgeprägten Flächenelemente eine konstruktiv einfache Tragstruktur realisierbar, die zwei Funktionen erfüllt. Einerseits wird die Bildung eines geschlossenen ersten Ladebereichs im Laderaum zur Unterbringung und zum Schutz von Package bzw. des Laderauminhalts und andererseits eine Erhöhung der Steifigkeit der Tragstruktur des Laderaums realisiert. Diese Erhöhung der Steifigkeit ermöglicht eine verbesserte Einleitung von im Crashfall entstehender Aufprallenergie in die Tragstruktur und eine gleichmäßigere Verteilung dieser Aufprallenergie innerhalb der Tragstruktur.

Bevorzugt sind die Flächenelemente zumindest teilweise als Blechteil ausgeführt. In vorteilhafter Weise sind die Blechteile baulich einfach und sehr leicht ausgeführt, sind aber trotz Leichtbauweise belastbar und ideal als Flächenelement in einem Laderaum montierbar. Zugleich ist das als Bodenteil ausgeführte Flächenelement in seiner Funktion als tragendes Bauteil besonders belastbar bzw. verwindungssteif. Trotz Leichtbauweise können die als Blechteile ausgeführten Flächenelemente einen großen Teil von eventuell am Kraftfahrzeug angreifenden Kräften aufnehmen bzw. in die Tragstruktur des Fahrzeugs weiterleiten. Vorzugsweise können die Blechteile kostengünstig an die geometrischen Abmessungen der Längsträger angepasst bzw. montiert werden. In vorteilhafter Weise ist hierdurch eine konstruktiv einfache Erhöhung der Steifigkeit der Tragstruktur und damit der ganzen Fahrzeugkarosserie erreichbar, wodurch eine verbesserte Einleitung der auftretenden Aufprallenergie in die Tragstruktur im Heckbereich eines Fahrzeugs und eine gleichmäßigere Verteilung dieser Aufprallenergie in der Tragstruktur erfolgen kann. Zudem kann über die Zusammensetzung bzw. die Eigenschaften der Werkstoffe und über die Materialdicke der Blechteile gezielt Einfluss auf die Steifigkeit bzw. Torsionssteifigkeit der Tragstruktur genommen werden.

Des Weiteren wird vorgeschlagen, dass die Flächenelemente zumindest teilweise als Halteeinrichtung für elektrische und/oder elektronische Bauteile bzw. Baugruppen dienen. Durch die Nutzung der Flächenelemente als Halteeinrichtung in einem Laderaum, beispielsweise für eine Batterie, können weiter Vorteile bezüglich des Platzbedarfs im ersten Ladebereich des Laderaums erzielt werden, da ein derart ausgeführtes Flächenelement auf Grund seiner geometrischen Gestalt verhältnismäßig wenig Raum in Anspruch nimmt und somit den Platz im Laderaum nicht verkleinert. Des Weiteren kann zusätzliches Befestigungsmaterial für eine Batterie entfallen, wodurch Gewicht und Herstellungskosten bzw. Montagekosten gesenkt werden können.

In vorteilhafter Ausgestaltung der erfindungsgemäßen Fahrzeugkarosserie ist der zweite Ladebereich des Laderaumes durch ein auf die Längsträgeranordnung aufgesetztes umlaufendes Ringelement gebildet. In vorteilhafter Weise kann somit ein einfaches und kostengünstiges Bauteil modellabhängig die Tragstruktur im zweiten Ladebereich des Laderaums eines Fahrzeugs begrenzen. Das aufgesetzte umlaufende Ringelement kann nahezu unabhängig von den begrenzenden Dimensionen der Längsträgeranordnung und ohne eine Materialdopplung im Bereich der Längsträgeranordnung konstruiert werden und somit ein größtmögliches Laderaumvolumen im zweiten Ladebereich bieten. Dadurch kann ein extrem leichtes Bauteil entstehen, das somit ganz im Sinne eines Leichtbaugedankens konzipierbar ist. Das umlaufende Ringelement eignet sich insbesondere für Fahrzeuge, die in Kleinserienfertigung produziert werden.

In weiterer vorteilhafter Ausgestaltung der erfindungsgemäßen Fahrzeugkarosserie schließt eine Stirnseite des Ringelements mit einer oberen Kontur der Fahrzeugkarosserie ab. In vorteilhafter Weise ist hierdurch auf eine einfache und kostengünstige Weise eine optimale Anpassung des Ringelements an die Kontur der Fahrzeugkarosserie möglich, wodurch nach Schließen eines Laderaumdeckels nach außen ein vollständig geschlossener Laderaum ausgebildet ist.

Vorzugsweise ist eine umlaufende äußere Mantelfläche des Ringelements zumindest teilweise an eine Kontur von den Laderaum umgebenden Strukturbauteilen der Tragstruktur angepasst. Ein derart an die Strukturbauteile der Tragstruktur anliegendes Ringelement kann dadurch einen besonders großes Laderaumvolumen im zweiten Ladebereich des Laderaums einnehmen und spielfrei montiert werden. In vorteilhafter Weise ergibt sich hierdurch auf einfache Weise eine formstabile und belastbare Ausführung des Ringelements mit ausreichender Auflagefläche an den Strukturbauteilen der Tragstruktur. Ein weiterer Vorteil des Ringelements ist die einfache Montage bzw. Demontage. Zweckmäßigerweise wird das Ringelement bei der Montage lose in die den Laderaum umgebenden Strukturbauteile der Tragstruktur der Fahrzeugkarosserie eingelegt und anschließend mit der Tragstruktur verbunden. Hierdurch kann auf einfache Weise sowohl der Austausch eines beschädigten Ringelements oder einer Laderaumwanne als auch eine Nachrüstung bestehender Tragstrukturen von Fahrzeugkarosserien mit Ringelementen erfolgen.

Vorteilhafte Ausführungsformen der Erfindung sind in der Zeichnung dargestellt und werden nachfolgend beschrieben.

Dabei zeigen:

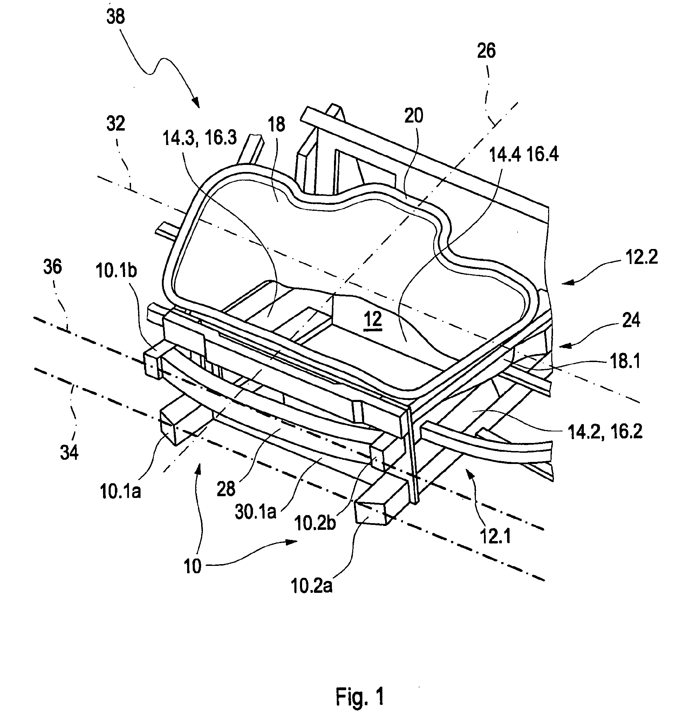

- Fig. 1: eine perspektivische Darstellung eines Ausführungsbeispiels einer erfindungsgemäßen Fahrzeugkarosserie mit einer Tragstruktur, welche eine Längsträgeranordnung mit in unterschiedlichen Ebenen angeordneten Längsträgern aufweist, wobei in jeder Ebene zwei parallel zueinander angeordnete Längsträger angeordnet sind, wobei die Tragstruktur einen Laderaum aufnimmt, welcher einen innerhalb der Längsträgeranordnung angeordneten ersten Ladebereich und einen oberhalb der Längsträgeranordnung angeordneten zweiten Ladebereich mit einem eingelegten Ringelement umfasst, und

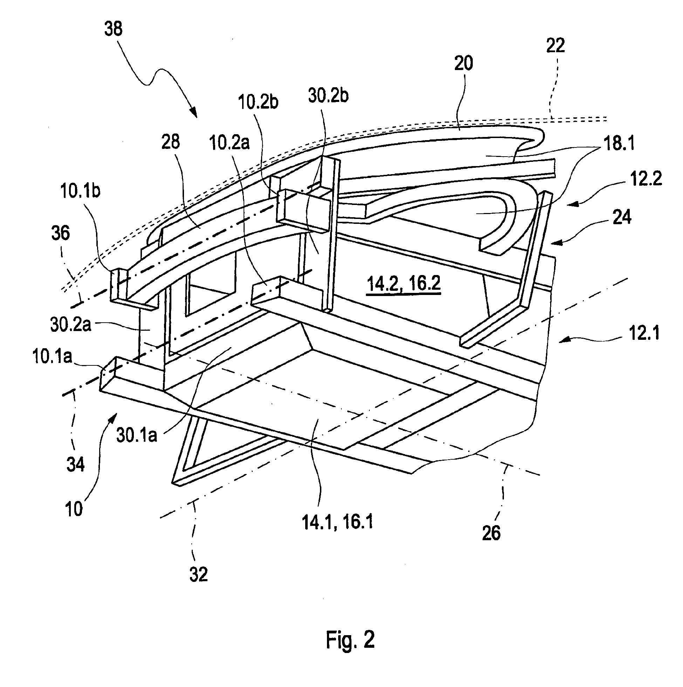

- Fig. 2: eine perspektivische Darstellung der Fahrzeugkarosserie aus Fig. 1 von unten.

Fig. 1 zeigt eine Draufsicht auf einen Teil einer Fahrzeugkarosserie mit einer Tragstruktur 38, welche eine Längsträgeranordnung 10 mit in unterschiedlichen Ebenen 34, 36 angeordneten Längsträgern 10.1 a, 10.1 b, 10.2a, 10.2b aufweist, wobei in jeder Ebene 34, 36 zwei im Wesentlichen parallel zueinander angeordnete Längsträger 10.1 a, 10.1b, 10.2a, 10.2b vorgesehen sind, welche sich jeweils in Richtung einer Fahrzeuglängsachse 26 entlang einer Fahrzeugaußenseite erstrecken. Dabei umfasst die untere Ebene 34 der Längsträgeranordnung 10 die beiden Längsträger 10.1a und 10.2a und die obere Ebene 36 die beiden Längsträger 10.1 b und 10.2b. Um eine Torsionssteifigkeit der Fahrzeugkarosserie zu gewährleisten, ist ein Verbund der Längsträgeranordnung 10 mit einem Querträger 28 bzw. mit Strukturelementen 30.1 a, 30.2a, 30.2b der Tragstruktur 38 vorgesehen. An ihren freien, dem Fahrzeugendbereich zugewandten Enden sind die Längsträger 10.1a und 10.2a in der unteren Ebene 34 horizontal über ein sich in Richtung einer Fahrzeugquerachse 32 erstreckendes Strukturelement 30.1 a der Tragstruktur 38 und die Längsträger 10.1 b und 10.2b in der oberen Ebene 36 horizontal über einen sich in Richtung einer Fahrzeugquerachse 32 erstreckenden Querträger 28 miteinander verbunden. Die Verbindung der Längsträger 10.1a, 10.1b, 10.2a, 10.2b an ihren freien, dem Fahrzeugendbereich zugewandten Enden in vertikaler Richtung erfolgt über ein Strukturelement 30.2a, das die Längsträger 10.1a und 10.1b und über ein Strukturelement 30.2b, das die Längsträger 10.2a und 10.2b miteinander verbindet. Vorzugsweise bildet dieser Fahrzeugendbereich die Stoßfängerseite des Fahrzeugs aus. Die Tragstruktur 38 nimmt einen Laderaum 12 auf. Eine derartige Längsträgeranordnung 10 kann innerhalb einer Tragstruktur 38 einer Fahrzeugkarosserie im Bereich eines Vorderwagens oder eines Hinterwagens angeordnet sein.

Um eine Fahrzeugkarosserie mit einer Tragstruktur 38 anzugeben, welche bei einfacher und kostengünstiger Konstruktion sowie erhöhter Steifigkeit einen ausreichenden Laderaum 12 in der Tragstruktur 38 bereitstellt, wird erfindungsgemäß vorgeschlagen, dass die Tragstruktur 38 einen Laderaum 12 aufnimmt, welcher einen im Wesentlichen, innerhalb der Längsträgeranordnung 10 angeordneten ersten Ladebereich 12.1 und einen im Wesentlichen oberhalb der Längsträgeranordnung 10 angeordneten zweiten Ladebereich 12.2 umfasst.

Da der erste Ladebereich 12.1 zwischen den Längsträgern 10.1 a, 10.1 b, 10.2a, 10.2b der Längsträgeranordnung 10 offene Zwischenräume 16.1, 16.2, 16.3, 16.4 aufweist und so als Laderaum 12 nicht brauchbar ist, werden zur Bildung des ersten Ladebereichs 12.1 zwischen den Längsträgern 10.1 a, 10.1 b, 10.2a, 10.2b der Längsträgeranordnung 10 die ausgebildeten Zwischenräume 16.1, 16.2, 16.3, 16.4 zumindest teilweise durch Flächenelemente 14.1, 14.2, 14.3, 14.4 geschlossen. Die Flächenelemente 14.1, 14.2, 14.3, 14.4 werden beispielsweise aus Metall- und/oder Faserverbundwerkstoffen gefertigt.

Um einen Laderaum 12, der zur Verfügung gestellt ist, optimal zu nutzen bzw. vollständig auszubilden, sind die Flächenelemente zumindest teilweise als Bodenteil 14.1 und/oder als Seitenteil 14.2, 14.3, 14.4 des ersten Ladebereichs 12.1 ausgeführt. Zur weiteren Steigerung der Stabilität und der Verwindungssteifigkeit der Tragstruktur 38 der Fahrzeugkarosserie sind die Flächenelemente 14.1, 14.2, 14.3, 14.4 zumindest teilweise mit den Längsträgern 10.1a, 10.1 b, 10.2a, 10.2b verbunden. Zu diesem Zweck werden die Randbereiche der Flächenelemente 14.1, 14.2, 14.3, 14.4 flächenbündig mit den Außenflächen der Längsträger 10.1 a, 10.1 b, 10.2a, 10.2b verschraubt, verklebt und/oder verschweißt, wobei jedoch auch andere einem Fachmann als sinnvoll erscheinende Verbindungstechniken denkbar sind.

Im vorliegenden Ausführungsbeispiel sind die Flächenelemente 14.1, 14.2, 14.3, 14.4 zumindest teilweise als so genanntes Schubfeld ausgeführt. Das hat insbesondere den Vorteil, dass in einem Crashfall mit einem derartigen als Schubfeld ausgeführten Flächenelement 14.1, 14.2, 14.3, 14.4 eine aufprallbedingte Kraft, welche in einen der Längsträger 10.1 a, 10.1 b, 10.2a, 10.2b eingeleitet wird, auf den gegenüberliegenden Längsträger 10.1 a, 10.1 b, 10.2a, 10.2b übertragen werden kann. Wesentlich für diese Kraftübertragung auf den gegenüberliegenden Längsträger 10.1 a, 10.1 b, 10.2a, 10.2b soll hierbei die Anbindung des Flächenelementes 14.1, 14.2, 14.3, 14.4 an die einander gegenüberliegenden Längsträger 10.1 a, 10.1 b, 10.2a, 10.2b sein.

Damit die Zwischenräume 16.1, 16.2, 16.3, 16.4 zwischen den Längsträgern 10.1a, 10.1 b, 10.2a, 10.2b der Längsträgeranordnung 10 einen dichten Raum mit optimaler Belastbarkeit ausbilden, sind die Flächenelemente 14.1, 14.2, 14.3, 14.4 zumindest teilweise als Blechteil ausgeführt. Die mit den Längsträgern 10.1a, 10.1 b, 10.2a, 10.2b verbundenen Flächenelemente 14.1, 14.2, 14.3, 14.4 füllen die Zwischenräume 16.1, 16.2, 16.3, 16.4 zwischen den Längsträgern 10.1 a, 10.1 b, 10.2a, 10.2b der Tragstruktur 38 aus und vergrößern damit die Steifigkeit der Tragstruktur 38 beispielsweise im Fahrzeugendbereich unter Ausbildung eines nach unten geschlossenen Laderaums 12.

In vorteilhafter Weise können die Flächenelemente 14.1, 14.2, 14.3, 14.4 zumindest teilweise als nicht dargestellte Halteeinrichtungen für elektrische und/oder elektronische Bauteile bzw. Baugruppen verwendet werden. Dabei kann die Halteeinrichtung sowohl stabil als auch platzsparend in zumindest einem Flächenelement 14.1, 14.2, 14.3, 14.4 integriert sein, welches dennoch die Funktion als Schubfeld ausführt.

Damit im oberen Bereich der Laderaum 12 nach außen abgeschlossen ist, ist der zweite Ladebereich 12.2 des Laderaumes 12 durch ein auf die Längsträgeranordnung 10 aufgesetztes umlaufendes Ringelement 18 gebildet, welches in die den Laderaum 12 umgebenden Strukturbauteile 24 der Tragstruktur 38 eingelegt wird. Dabei passt sich eine umlaufende äußere Mantelfläche 18.1 des Ringelements 18 zumindest teilweise an eine Kontur von Strukturbauteilen 24 der Tragstruktur 38 an, welche den Laderaum 12 umgeben, und verdeckt somit die Strukturbauteile 24 der Tragstruktur 38. Das umlaufende Ringelement 18 weist mehrere horizontale flächige Bereiche auf, die sich auf Strukturbauteilen 24 der Tragstruktur 38 abstützen können. Dadurch ist der zweite Ladebereich 12.2 des Laderaums 12 im oberen Bereich optisch ansprechend begrenzt.

In einer Ausgestaltung ist das umlaufende Ringelement 18 aus einem nichtmetallischen Werkstoff, insbesondere einem Kunststoff ausgebildet, wodurch in vorteilhafter Weise ein extrem leichtes und dennoch formstabiles Bauteil entsteht, welches somit ganz im Sinne eines Leichtbaugedankens konzipiert ist.

Eine Stirnseite 20 des Ringelements 18 schließt mit einer oberen Kontur der Karosserie 22 ab, wodurch ein abgeschlossener Trockenbereich im zweiten Ladebereich 12.2 des Laderaums 12 entsteht, der wirkungsvoll einen Eintrag von Feuchtigkeit und Staub verhindert. Im vorliegenden Ausführungsbeispiel ist die Stirnseite 20 des Ringelements 18 mit einer Gummidichtung oder PVC-Abdichtung versehen, wodurch eine Reduzierung der Geräuschübertragung vom Ringelement 18 auf die Fahrzeugkarosserie 22 und dennoch eine sichere Befestigung des Ringelements 18 an der Fahrzeugkarosserie 22 gewährleistet ist. Der Dichtungsbereich des Ringelements 18 ermöglicht sowohl den Schutz der Kanten des Ringelements 18 als auch die sichere Verbindung derselben an der Fahrzeugkarosserie 22. Dies bedeutet, dass die Einleitung von Fahrgeräuschen, die als Fahrzeuginnengeräusche wahrgenommen werden, über Körperschall in die Fahrzeugkarosserie auf einfache Weise wirkungsvoll gehemmt bzw. reduziert werden kann.

### BEZUGSZEICHENLISTE

- 10: Längsträgeranordnung
- 10.1 a, 10.1b, 10.2a, 10.2b: Längsträger
- 12: Laderaum
- 12.1: erster Ladebereich (Laderaum)
- 12.2: zweiter Ladebereich (Laderaum)
- 14.1, 14.2, 14.3, 14.4: Flächenelement
- 16.1, 16.2, 16.3, 16.4: Bereich
- 18: Ringelement
- 18.1: äußere Mantelfläche (Ringelement)
- 20: Stirnseite (Ringelement)
- 22: Fahrzeugkarosserie
- 24: Strukturbauteilen
- 26: Fahrzeuglängsachse
- 28: Querträger
- 30.1 a, 30.2a, 30.2b: Strukturelement
- 32: Fahrzeugquerachse
- 34: untere Ebene
- 36: obere Ebene
- 38: Tragstruktur

## Patentansprüche

1. Fahrzeugkarosserie mit einer Tragstruktur (38), welche mindestens eine Längsträgeranordnung (10) mit in unterschiedlichen Ebenen (34, 36) angeordneten Längsträgern (10.1a, 10.1b, 10.2a, 10.2b) aufweist, wobei in jeder Ebene (34, 36) zumindest zwei im Wesentlichen parallel zueinander angeordnete Längsträger (10.1 a, 10.1 b, 10.2a, 10.2b) vorgesehen sind, welche sich jeweils in Richtung einer Fahrzeuglängsachse (26) entlang einer Fahrzeugaußenseite erstrecken, **dadurch gekennzeichnet, dass** die Tragstruktur (38) einen Laderaum (12) als Kofferraumvolumen aufnimmt, welcher einen im Wesentlichen innerhalb der Längsträgeranordnung (10) angeordneten ersten Ladebereich (12.1) und einen im Wesentlichen oberhalb der Längsträgeranordnung (10) angeordneten zweiten Ladebereich (12.2) umfasst, wobei zur Bildung des ersten Ladebereichs (12.1) zwischen den Längsträgern (10.1 a, 10.1 b, 10.2a, 10.2b) der Längsträgeranordnung (10) ausgebildete Zwischenräume (16.1, 16.2, 16.3, 16.4) zumindest teilweise durch Flächenelemente (14.1, 14.2, 14.3, 14.4) geschlossen sind.

2. Fahrzeugkarosserie nach-Anspruch 1, **dadurch gekennzeichnet, dass** die Flächenelemente zumindest teilweise als Bodenteil (14.1) und/oder als Seitenteil (14.2, 14.3, 14.4) des ersten Ladebereichs (12.2) ausgeführt sind.

3. Fahrzeugkarosserie nach Anspruch 1 oder 2, **dadurch gekennzeichnet, dass** die Flächenelemente (14.1, 14.2, 14.3, 14.4) zumindest teilweise mit den Längsträgern (10.1 a, 10.1 b, 10.2a, 10.2b) verbunden sind.

4. Fahrzeugkarosserie nach einem der vorherigen Ansprüche 1 bis 3, **dadurch gekennzeichnet, dass** die Flächenelemente (14.1, 14.2, 14.3, 14.4) zumindest teilweise als Schubfeld ausgeführt sind.

5. Fahrzeugkarosserie nach einem der vorherigen Ansprüche 1 bis 4, **dadurch gekennzeichnet, dass** die Flächenelemente (14.1, 14.2, 14.3, 14.4) zumindest teilweise als Blechteil ausgeführt sind.

6. Fahrzeugkarosserie nach einem der vorherigen Ansprüche 1 bis 5, **dadurch gekennzeichnet, dass** die Flächenelemente (14.1, 14.2, 14.3, 14.4) zumindest teilweise als Halteeinrichtung für zumindest ein elektrisches und/oder elektronisches Bauteil dienen.

7. Fahrzeugkarosserie nach einem der vorherigen Ansprüche 1 bis 6, **dadurch gekennzeichnet, dass** der zweite Ladebereich (12.2) des Laderaumes (12) durch ein auf die Längsträgeranordnung (10) aufgesetztes umlaufendes Ringelement (18) gebildet ist.

8. Fahrzeugkarosserie nach Anspruch 7, **dadurch gekennzeichnet, dass** eine Stirnseite (20) des Ringelements (18) mit einer oberen Kontur der Fahrzeugkarosserie (22) abschließt.

9. Fahrzeugkarosserie nach Anspruch 7 oder 8, **dadurch gekennzeichnet, dass** eine umlaufende äußere Mantelfläche (18.1) des Ringelements (18) zumindest teilweise an eine Kontur von den Laderaum (12) umgebenden Strukturbauteilen (24) der Tragstruktur (38) angepasst ist.

## Claims

1. Vehicle bodywork comprising a support structure (38) which has at least one longitudinal member arrangement (10) having longitudinal members (10.1 a, 10.1b, 10.2a, 10.2b) arranged in different planes (34, 36),
at least two substantially parallel longitudinal members (10.1a, 10.1b, 10.2a, 10.2b) being provided in each plane (34, 36) and each extending along a vehicle exterior in the direction of a vehicle longitudinal axis (26), **characterised in that** the support structure (38) contains a loading space (12) as a luggage compartment volume, which space comprises a first loading region (12.1) arranged substantially inside the longitudinal member arrangement (10) and a second loading region (12.2) arranged substantially above the longitudinal member arrangement (10), at least some of the gaps (16.1, 16.2, 16.3, 16.4) formed between the longitudinal members (10.1a, 10.1 b, 10.2a, 10.2b) of the longitudinal member arrangement (10) being closed by surface elements (14.1, 14.2, 14.3, 14.4) in order to form the first loading region (12.1).

2. Vehicle bodywork according to claim 1, **characterised in that** at least some of the surface elements are configured as a bottom part (14.1) and/or as a side part (14.2, 14.3, 14.4) of the first loading region (12.2).

3. Vehicle bodywork according to either claim 1 or claim 2, **characterised in that** at least some of the surface elements (14.1, 14.2, 14.3, 14.4) are connected to the longitudinal members (10.1 a, 10.1 b, 10.2a, 10.2b).

4. Vehicle bodywork according to any of the preceding claims 1 to 3, **characterised in that** at least some of the surface elements (14.1, 14.2, 14.3, 14.4) are configured as a thrust field.

5. Vehicle bodywork according to any of the preceding claims 1 to 4, **characterised in that** at least some of the surface elements (14.1, 14.2, 14.3, 14.4) are configured as a panel.

6. Vehicle bodywork according to any of the preceding claims 1 to 5, **characterised in that** at least some of the surface elements (14.1, 14.2, 14.3, 14.4) are used as a holding device for at least one electric and/or electronic component.

7. Vehicle bodywork according to any of the preceding claims 1 to 6, **characterised in that** the second loading region (12.2) of the loading space (12) is formed by a peripheral annular element (18) mounted on the longitudinal member arrangement (10).

8. Vehicle bodywork according to claim 7, **characterised in that** one end face (20) of the annular element (18) is terminated by an upper contour of the vehicle bodywork (22).

9. Vehicle bodywork according to either claim 7 or claim 8, **characterised in that** a peripheral outer shell (18.1) of the annular element (18) is adapted at least in part to a contour of structural components (24) of the support structure (38) which surround the loading space (12).

## Revendications

1. Carrosserie de véhicule avec une structure portante (38), qui présente au moins un aménagement de longerons (10) avec des longerons (10.1a, 10.1b, 10.2a, 10.2b) disposés dans différents plans (34, 36), dans laquelle il est prévu, dans chaque plan (34, 36), au moins deux longerons (10.1a, 10.1b, 10.2a, 10.2b) aménagés sensiblement parallèlement l'un à l'autre, qui s'étendent respectivement dans la direction d'un axe longitudinal (26) du véhicule le long d'un côté externe du véhicule, **caractérisée en ce que** la structure portante (38) présente un espace de chargement (12) comme volume de coffre à bagages, qui comprend une première zone de chargement (12.1) aménagée sensiblement à l'intérieur de l'aménagement de longerons (10) et une seconde zone de chargement (12.2) aménagée sensiblement au-dessus de l'aménagement de longerons (10), dans laquelle, pour former la première zone de chargement (12.1), des espaces intermédiaires (16.1, 16.2, 16.3, 16.4) formés entre les longerons (10.1a, 10.1b, 10.2a, 10.2b) de l'aménagement de longerons (10) sont fermés par des éléments plans (14.1, 14.2, 14.3, 14.4).

2. Carrosserie de véhicule selon la revendication 1, **caractérisée en ce que** les éléments plans se présentent au moins en partie sous la forme d'un partie de fond (14.1) et/ou d'une partie latérale (14.2, 14.3, 14.4) de la première zone de chargement (12.2).

3. Carrosserie de véhicule selon la revendication 1 ou la revendication 2, **caractérisée en ce que** les éléments plans (14.1, 14.2, 14.3, 14.4) sont reliés au moins en partie aux longerons (10.1a, 10.1b, 10.2a, 10.2b).

4. Carrosserie de véhicule selon l'une quelconque des revendications 1 à 3, **caractérisée en ce que** les éléments plans (14.1, 14.2, 14.3, 14.4) se présentent au moins en partie sous la forme d'un champ de poussée.

5. Carrosserie de véhicule selon l'une quelconque des revendications 1 à 4, **caractérisée en ce que** les éléments plans (14.1, 14.2, 14.3, 14.4) se présentent au moins en partie sous la forme d'une partie de tôle.

6. Carrosserie de véhicule selon l'une quelconque des revendications 1 à 5, **caractérisée en ce que** les éléments plans (14.1, 14.2, 14.3, 14.4) servent au moins en partie comme dispositif de support pour au moins un composant électrique et/ou électronique.

7. Carrosserie de véhicule selon l'une quelconque des revendications 1 à 6, **caractérisée en ce que** la seconde zone de chargement (12.2) de l'espace de chargement (12) est formée par un élément annulaire périphérique (18) exposé sur l'aménagement de longerons (10).

8. Carrosserie de véhicule selon la revendication 7, **caractérisée en ce qu'**un côté avant (20) de l'élément annulaire (18) est fermé par un contour supérieur de la carrosserie de véhicule (22).

9. Carrosserie de véhicule selon la revendication 7 ou la revendication 8, **caractérisée en ce qu'**une surface enveloppante externe périphérique (18.1) de l'élément annulaire (18) est adaptée au moins en partie à un contour de composants structurels (24) de la structure portante (38) entourant l'espace de chargement (12).
